# EUROPÄISCHE PATENTANMELDUNG

(11) **EP 1 870 879 A2**
(43) Veröffentlichungstag der Anmeldung: **26.12.2007**
(21) Anmeldenummer: 07012093.6
(22) Anmeldetag: 20.06.2007
(51) Int. Cl.: G10K 11/178

(54) **Verfahren und Vorrichtung zur Schallemissionsminderung eines Kühlturmes**

(30) Priorität: 23.06.2006 DE 102006029012
(71) Anmelder: SPX-Cooling Technologies GmbH, 40882 Ratingen (DE)
(72) Erfinder: Tesche, Walter, 40822 Mettmann (DE)
(74) Vertreter: Lang, Friedrich

(57) **Zusammenfassung**

Die Erfindung betrifft ein Verfahren zur Schallemissionsminderung eines Kühlturmes (20) mit mindestens einer Lufteintrittsfläche und/oder einer Luftaustrittsfläche (21) und eine zugehörige Vorrichtung (9). Das Verfahren weist die Schritte auf: Erfassen eines an der Lufteintrittsfläche und/oder Luftaustrittsfläche emittierten Schallsignals in Abhängigkeit von der Zeit, so dass ein erfasstes Schallsignal vorliegt, Phasenverschieben des erfassten Schallsignals, so dass ein phasenverschobenes Schallsignal vorliegt, Verstärken des phasenverschobenen Schallsignals, so dass ein verstärktes phasenverschobenes Schallsignal vorliegt, und Zuführen des verstärkten phasenverschobenen Schallsignals zu mindestens einer Ausgabevorrichtung, so dass ein ausgegebenes verstärktes phasenverschobenes Schallsignal generiert wird, wobei die Ausgabevorrichtung im Bereich der Lufteintrittsfläche und/oder Luftaustrittsfläche so angeordnet ist, dass ein Überlagerungs-Schallsignal aus der Überlagerung des ausgegebenen verstärkten phasenverschobenen Schallsignals und des emittierten Schallsignals erzeugt wird. Durch die Überlagerung der beiden Signale ist es möglich, ein Auslöschen der Schallsignale zu bewirken, so dass auf einfache Weise und mit geringen Kosten ein Kühlturm so nachgerüstet werden kann, dass seine Schallemission wirksam gedämpft wird.

## Beschreibung

Die Erfindung betrifft ein Verfahren zur Schallemissionsminderung eines Kühlturmes und eine zugehörige Vorrichtung zur Schallemissionsminderung.

Ein Kühlturm emittiert über seine Lufteintrittsflächen und Luftaustrittsflächen Geräusche, die einen für bewohnte Gebiete zulässigen Lärmpegel überschreiten können. Die Geräusche werden zum Beispiel bei einem Nasskühlturm durch das Verrieseln von Wasser und dem anschließenden Auftreffen der Wassertropfen auf eine Oberfläche eines Sammelbeckens (so genanntes Wasserrauschen) verursacht. Bei mechanisch belüfteten Kühltürmen werden die Geräusche durch einen Maschinenstrang mit zum Beispiel Ventilator, Zwischengetriebe und Motor induziert. Die Geräusche addieren sich und werden durch Öffnungen eines Kühlturmes, welche vorrangig Lufteintrittsflächen und Luftaustrittsflächen sind, emittiert.

Um die gesetzlich vorgeschriebenen Immissionswerte eines Kühlturmes einzuhalten, der sich in bewohntem Gebiet befindet, haben sich unterschiedliche Dämpfungsmaßnahmen bewährt. Dazu gehören der Einsatz eines Aufprallabschwächers, von Schallschutzwänden oder Kulissenschalldämpfer.

Bei einem Aufprallabschwächer handelt es sich um offenporiges Material, welches in einem Kühlturm unmittelbar über der Oberfläche des Wasserspiegels im Wassersammelbecken angebracht ist. Der Wasserregen wird von dem Aufprallabschwächer aufgefangen, wodurch sich das Aufprallgeräusch deutlich reduziert. Mit einer solchen Vorrichtung kann eine Geräuschdämpfung des Wasserrauschens um etwa 8 dB(A) erreicht werden. Nachteilig ist jedoch zum einen, dass der Aufwand zur Errichtung eines solchen Aufprallabschwächers relativ hoch ist. So muss unter anderem eine stabile, flächig ausgebildete und dennoch wasserdurchlässige Unterkonstruktion im Sammelbecken errichtet werden, auf der sich das geräuschmindernde Vlies eines Aufprallabschwächers legen lässt. Zum anderen besteht ein Nachteil darin, dass bei einer solchen Konstruktion aufgrund der großen effektiven und stets nassen Oberfläche des Vlies eine Verschmutzung und biologisches Wachstum leicht auftreten kann, so dass häufige und zudem sehr aufwändige Wartungsarbeiten durchzuführen sind. Der Wasserregen führt zusätzlich zu einer erosiven Belastung des Aufprallabschwächers und damit zu einer relativ kurzen Lebensdauer der gesamten Vorrichtung. Außerdem muss der Wasserspiegel in dem Sammelbecken des Kühlturmes auf einem konstanten Niveau gehalten werden, um die Funktion des Aufprallabschwächers sicherzustellen. Ein Nachrüsten einer bereits bestehenden Anlage mit einer solchen Vorrichtung ist, verbunden mit hohem Aufwand, nur bedingt möglich.

Eine Schallschutzwand kann erfolgreich verwendet werden, wenn sich ein Immissionsort unmittelbar hinter der Schallschutzwand befindet. Bei größerem Abstand zwischen Immissionsort und Wand kann es zu Beugungseffekten der Schallwellen und damit erneut zu einer hohen Geräuschbelastung kommen, so dass nur eine geringe oder keine Geräuschdämpfung erreicht wird. Nachteilig ist ferner, dass eine meist hohe Schallschutzwand in einem bewohnten Gebiet die Sicht stark behindert und von den dort lebenden Personen auf Dauer als belastend empfunden wird.

Ein Kulissenschalldämpfer stellt eine weitere wirksame Maßnahme dar, eine Schallemission zu verringern. Nachteilig ist jedoch der hohe Bauaufwand aufgrund eines auf der Zuluftseite und Abluftseite erforderlichen luftdichten und schalldichten Vorbaus, in den die Schalldämpfer eingepasst werden. Die statischen und dynamischen Lasten, die bei der Verwendung eines solchen Schalldämpfers einhergehen, müssen ferner vom gesamten Bauwerk des Kühlturmes übernommen werden. Die Investitionskosten für die Schalldämpfer und die erforderlichen Zusatzkonstruktionen sind relativ hoch. Außerdem stellt ein Schalldämpfer einen zusätzlichen Luftwiderstand dar, der bei gleicher Kühlleistung des Kühlturmes eine stärkere Luftfördereinrichtung erforderlich macht. Bei einem Naturzug-Kühlturm muss dann eine höhere Bauhöhe, bei einem Kühlturm mit mechanischem Luftzug eine höhere Antriebsleistung vorgesehen werden. Solche Maßnahmen sind besonders bei einer Nachrüstung aufwändig und teuer. Werden sie nicht vorgenommen, verringert sich die Kühlleistung des Kühlturmes.

Der Erfindung liegt daher die Aufgabe zugrunde, ein Verfahren und eine zugehörige Vorrichtung zur Schallemissionsminderung eines Kühlturmes zu schaffen, wobei das Verfahren einfach durchführbar und sehr wirksam ist, die Vorrichtung bei bestehenden Anlagen einfach nachgerüstet werden kann, die Kühlleistung des Kühlturmes nicht beeinflusst wird sowie nur geringe Investitionskosten und Betriebskosten erforderlich sind.

Die Aufgabe wird durch die Merkmale der unabhängigen Ansprüche gelöst. Vorteilhafte Ausgestaltungen der Erfindung sind in den Unteransprüchen aufgeführt.

Das erfindungsgemäße Verfahren zur Schallemissionsminderung eines Kühlturmes mit mindestens einer Lufteintrittsfläche und/oder einer Luftaustrittsfläche weist die Schritte auf: Erfassen eines an der Lufteintrittsfläche und/oder Luftaustrittsfläche emittierten Schallsignals in Abhängigkeit von der Zeit, so dass ein erfasstes Schallsignal vorliegt, Phasenverschieben des erfassten Schallsignals, so dass ein phasenverschobenes Schallsignal vorliegt, Verstärken des phasenverschobenen Schallsignals, so dass ein verstärktes phasenverschobenes Schallsignal vorliegt, und Zuführen des verstärkten phasenverschobenen Schallsignals zu mindestens einer Ausgabevorrichtung, so dass ein ausgegebenes verstärktes phasenverschobenes Schallsignal generiert wird, wobei die Ausgabevorrichtung im Bereich der Lufteintrittsfläche und/oder Luftaustrittsfläche so angeordnet ist, dass ein Überlagerungs-Schallsignal aus der Überlagerung des ausgegebenen verstärkten phasenverschobenen Schallsignals und des emittierten Schallsignals erzeugt wird. Durch die Überlagerung des phasenverschobenen Schallsignals mit dem emittierten Schallsignal kann erreicht werden, dass sich beide Signale zu Null addieren, so dass in der Summe keine Schallemission mehr vorliegt, die an die Umgebung abgestrahlt werden könnte. Innerhalb des Kühlturmes sind somit keine Umbauten oder, Schalldämpfer erforderlich, um die Schallemission zu unterdrücken oder zu verringern. Die durch das Wasserrauschen oder den Maschinenstrang erzeugten Schallemissionen werden ungehindert zugelassen. Beim Austreten aus dem Kühlturm wird aber das vorliegende Schallsignal durch das erfindungsgemäße Verfahren derart verändert, dass ein Imittend zum Beispiel in einem bewohnten Gebiet in der Nähe des Kühlturmes nur noch eine geringe oder keine wahrnehmbare Lärmbelästigung mehr erfährt.

Gemäß einer bevorzugten Ausführungsform der Erfindung ist die Ausbreitungsrichtung des verstärkten phasenverschobenen Schallsignals der Ausgabevorrichtung vom Kühlturm fort gerichtet. Die Schallemissionen werden somit nicht im Inneren des Kühlturmes beeinflusst, sondern erst nach Verlassen des Kühlturmes. Eine Überlagerung des Signale findet damit erst außerhalb des Kühlturmes statt. Ein Nachrüsten ist in diesem Fall besonders einfach möglich.

Ferner ist es zweckmäßig, dass das Erfassen des Schallsignals in einem Bereich der Lufteintrittsfläche und/oder Luftaustrittsfläche vorgenommen wird, in dem die höchste räumliche Schallintensität besteht. Damit wird erreicht, dass das für eine Lärmbelästigung am meisten relevante Signal, das heißt das Signal mit der höchsten Energie pro Fläche und Zeit, erfasst und mit einem geeigneten Signal überlagert wird, so dass die Schallintensität des Überlagerungs-Signals gering ist.

Vorzugsweise wird das Phasenverschieben des erfassten Schallsignals derart vorgenommen, dass der Mittelwert des Überlagerungs-Schallsignals ein Minimum erreicht. Dann ist sichergestellt, dass die niedrigste Schallbelastung und höchste Geräuschdämpfung erzielt wird. Das Minimum kann dabei erst in einem vorbestimmten Abstand von der Lufteintrittsfläche und/oder Luftaustrittsfläche erreicht werden. Damit wird dem Umstand Rechnung getragen, dass ein gesetzter Geräuschpegel nicht unbedingt unmittelbar am Kühlturmrand erreicht werden muss, sondern aufgrund gesetzlicher Bestimmungen erst in einem vorbestimmten Abstand vom Kühlturm. Dies kann den Aufwand für das Nachrüsten an einem bestehenden Kühlturm verringern.

Die größte Wirkung zur Minderung der Schallemission wird erreicht, wenn beim Phasenverschieben das erfasste Schallsignal in einem Bereich von 150° bis 180° verschoben wird. Damit können sich die Signale zu einem großen Anteil gegenseitig auslöschen. Das phasenverschobene Signal ist bei einer derartigen Phasenverschiebung ein "Antischall". Der Stellbereich von 150° bis 180° ergibt sich dadurch, dass die Erfassung eines Schallsignals, die Verarbeitung (Phasenverschiebung) dieses Signals mittels einer Recheneinheit und die Ausgabe des phasenverschobenen Signals eine gewisse zeitliche Verzögerung zur Folge hat, so dass nur bei extrem schneller Signalverarbeitung eine Phasenverschiebung von 180° eine maximale Schallminderung bewirkt. In der Praxis erreicht man bei Einsatz üblicher Vorrichtungen zur Signalverarbeitung die besten Ergebnisse zur Schallminderung bei einer etwas geringeren Phasenverschiebung als 180°, also zum Beispiel um 150°.

Eine wirksame Verringerung des von einem Kühlturm emittierten Schalls wird erzielt, wenn das emittierte Schallsignal in einem Frequenzbereich von 500 Hz bis 8000 Hz erfasst wird. Dieser Frequenzbereich deckt das Wasserrauschen oder die Geräusche eines Maschinenstrangs (Ventilator, Zwischengetriebe, Motor) ab. Einzeltöne, wie sie zum Beispiel von einem mechanischen Antrieb erzeugt werden, können dem genannten Frequenzbereich überlagert sein, so dass ein Erfassen eines Schallsignals im Frequenzbereich von 16 bis 20000 Hz die größte Sicherheit bietet, den emittierten Schall zu mindern.

Vorzugsweise ist das Verstärken des phasenverschobenen Schallsignals mittels eines Verstärkers verstellbar. Damit kann bei einer vorliegenden Schallintensität des emittierten Schallsignals vom Kühlturm auch eine adäquate Schallintensität des ausgegebenen phasenverschobenen Signals, welches durch das erfindungsgemäße Verfahren generiert wird, entgegengesetzt werden.

Zum Erfassen des emittierten Schallsignals an einer Lufteintrittsfläche und/oder Luftaustrittsfläche können mehrere Erfassungseinrichtungen zum Einsatz kommen. Damit ist es möglich, am gesamten Umfang des Kühlturmes einzelne Schallsignale aufzunehmen und über zugehörige Ausgabevorrichtungen zugehörige phasenverschobene Schallsignale abzugeben. Ferner ist es zweckmäßig, bei einem emittierten Schallsignal mit hoher Schallstärke ein einzelnes verstärktes phasenverschobenes Schallsignal mehreren Ausgabevorrichtungen zuzuführen, so dass eine gewünschte, relativ hohe Schallintensität erreicht wird.

Die Aufgabe wird ferner durch eine Vorrichtung zur Schallemissionsminderung eines Kühlturmes mit mindestens einer Lufteintrittsfläche und/oder einer Luftaustrittsfläche gelöst, welche aufweist: mindestens eine Erfassungsvorrichtung zum Erfassen eines emittierten Schallsignals in Abhängigkeit von der Zeit, so dass ein erfasstes Schallsignal generierbar ist, eine Vorrichtung zum Phasenverschieben des erfassten Schallsignals, so dass ein phasenverschobenes Schallsignal generierbar ist, eine Vorrichtung zum Verstärken des phasenverschobenen Schallsignals, so dass ein verstärktes phasenverschobenes Schallsignal generierbar ist, und mindestens eine Ausgabevorrichtung zum Ausgeben des verstärkten phasenverschobenen Schallsignals, so dass ein ausgegebenes verstärktes phasenverschobenes Schallsignal generierbar ist, wobei die Ausgabevorrichtung im Bereich der Lufteintrittsfläche und/oder Luftaustrittsfläche so angeordnet ist, dass ein Überlagerungs-Schallsignal aus der Überlagerung des ausgegebenen verstärkten phasenverschobenen Schallsignals und des emittierten Schallsignals generierbar ist.

Eine solche Vorrichtung ist nachträglich am Kühlturm einfach installierbar, einfach zu warten, erfordert keine baulichen Veränderungen im Inneren des Kühlturmes und arbeitet verschleißfrei. Die Bauteile sind relativ klein, so dass keine Sicht behindert wird, die zusätzlich am Kühlturm anzubringenden Teile weisen eine geringe Masse auf, und der Wirkungsgrad des Kühlturmes bleibt unverändert.

Vorzugsweise ist das Phasenverschieben derart durchführbar, dass der Mittelwert des Überlagerungs-Schallsignals ein Minimum erreicht. Am Besten lässt sich dies erzielen, wenn das Phasenverschieben des erfassten Schallsignals um 150° bis 180° durchführbar ist. Dann können beide Signale derart überlagert werden, dass sie sich nahezu zu Null addieren und eine deutliche Schallminderung erzielt wird.

Die Erfassungseinrichtung weist vorzugsweise ein Mikrophon auf, und die Ausgabevorrichtung weist vorzugsweise einen Lautsprecher auf. Diese Bauteile arbeiten im hörbaren Frequenzbereich sehr genau und sind zudem kostengünstig.

Gemäß einer weiteren Ausführungsform ist für jede Erfassungseinrichtung mindestens eine Ausgabevorrichtung für ein zugehöriges Überlagerungs-Schallsignal vorgesehen, wobei der Mittelwert des Überlagerungs-Schallsignals in einem vorbestimmten Abstand von der Lufteintrittsfläche und/oder Luftaustrittsfläche ein Minimum erreicht. Damit wird berücksichtigt, dass bei hoher emittierter Schallintensität vom Kühlturm ein phasenverschobenes Signal nur dann eine Schallminderung erreicht, wenn die Schallintensität dieses phasenverschobenen Signals einen ähnlich hohen Wert erreicht. Falls dies mit einer Ausgabevorrichtung alleine nicht erzielt werden kann, können mehrere Ausgabevorrichtungen dafür zum Einsatz kommen. Maßgebend ist jeweils nicht die Schallminderung direkt am Austritt des Schallsignals am Kühlturm, sondern eine verminderte Schallintensität im Rahmen der gesetzlichen Bestimmungen in einem vorbestimmten Abstand vom Kühlturm.

Die Erfindung betrifft ferner einen Kühlturm mit einer vorstehend genannten Vorrichtung zur Schallemissionsminderung.

Nachfolgend wird die Erfindung anhand von in der Zeichnung dargestellten Ausführungsbeispielen weiter beschrieben. Es zeigen:
- Figur 1:: eine schematische Darstellung zur Erläuterung einer Schallsignaladdition;
- Figur 2:: eine schematische Darstellung zur Erläuterung einer Schallsignaladdition mit zwei gegenphasigen Signalverläufen;
- Figur 3:: eine schematische Darstellung der erfindungsgemäßen Vorrichtung in Form eines Blockdiagrammes; und
- Figur 4:: eine schematische Darstellung einer Ausführungsform der erfindungsgemäßen Vorrichtung.

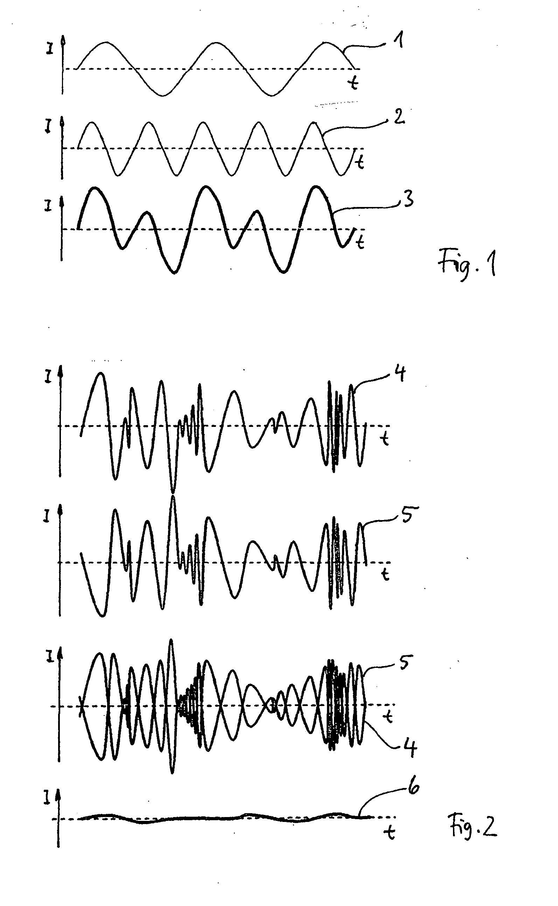

In Fig. 1 sind schematisch drei Schallwellen in Abhängigkeit von der Zeit dargestellt. Die Schallwelle 1 besitzt eine erste Frequenz (Tonhöhe) und eine erste Amplitude I (Lautstärke). Die zweite Schallwelle 2 besitzt eine zweite Frequenz mit der gleichen Amplitude wie die erste Schallwelle 1. Bei Addition der ersten Schallwelle 1 mit der zweiten Schallwelle 2 ergibt sich die dritte Schallwelle 3, die keine konstante Frequenz und keine konstante Amplitude mehr besitzt. Eine solche Addition tritt auf, wenn eine erste Schallquelle mit Schallwelle 1 und eine zweite Schallquelle mit Schallwelle 2 gleichzeitig angeregt werden und so platziert sind, dass sie miteinander wechselwirken können.

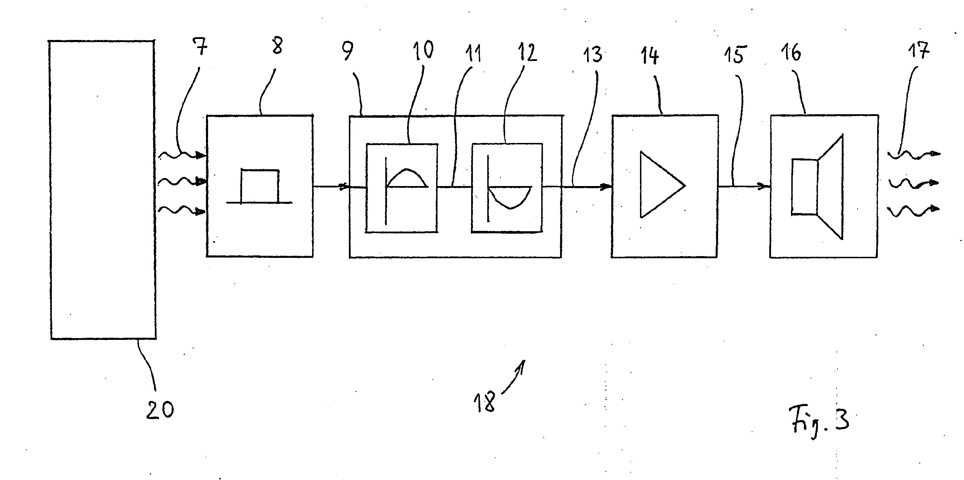

Bei mehreren Schallquellen, die zudem örtlich nicht eng benachbart zueinander angeordnet sind, kann es zu einer komplizierten Überlagerung von Schallwellen kommen, die ein breitbandiges Schallsignal an einer Messstelle bewirken. Um ein derart breitbandiges Signal, dass starke Schwankungen in der Schallintensität besitzen kann, zu dämpfen, kann es mit einem um 180° phasenverschobenen Signal gekoppelt werden. Fig. 2 zeigt ein Schallsignal 4 und ein gegenphasig dazu verlaufendes Schallsignal 5 (auch "Antischall" genannt). Werden beide Signale 4 und 5 überlagert, ergibt sich theoretisch ein Signalverlauf mit keiner Amplitude und keiner Frequenz, so dass sich die Schallsignale 4 und 5 gegenseitig ausgelöscht haben. In der Praxis verbleiben stets einige Signalreste, wie sie mit dem Überlagerungssignal 6 dargestellt sind.

Durch die Überlagerung der beiden zueinander gegenphasigen Schallsignale kann somit eine deutliche Reduzierung der Amplitude bzw. der Lautstärke eines emittierten Signals erzielt werden.

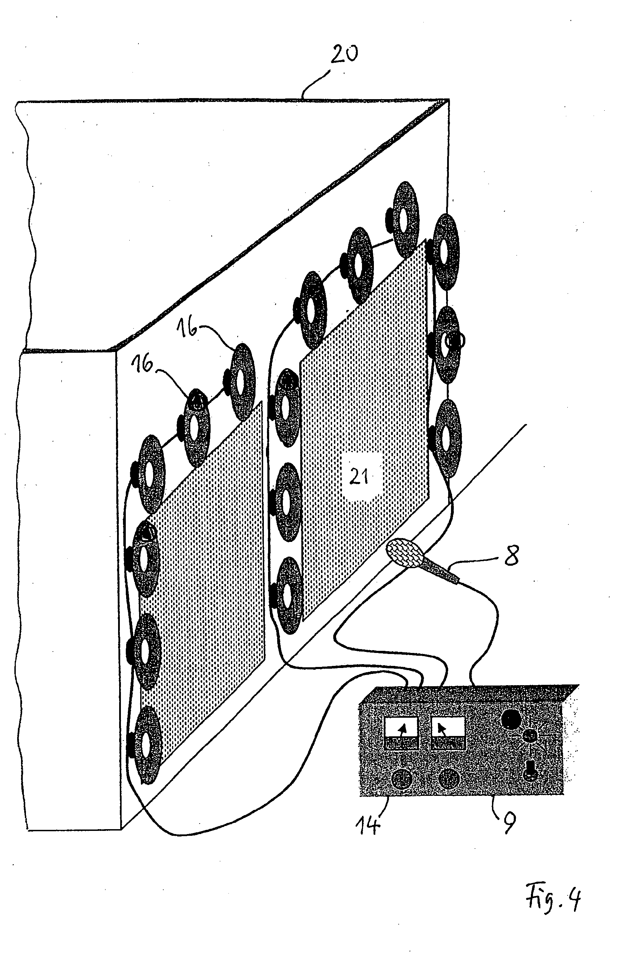

Die zugehörige Vorrichtung 18 gemäß einer Ausführungsform der Erfindung ist schematisch in Fig. 3 dargestellt. Ein von einem Kühlturm 20 emittiertes Schallsignal 7 mit beliebiger Frequenz und Amplitude wird von einer Erfassungsvorrichtung 8, welche zum Beispiel ein Mikrophon ist, erfasst. In einer Vorrichtung 9 wird das Signal mittels einer Vorrichtung 10 derart aufbereitet, dass die Signalstärke in Abhängigkeit von der Zeit erfasst wird. Ein derart erfasstes Schallsignal 11 wird dann in einer Vorrichtung 12 zum Phasenverschieben zum Beispiel derart verarbeitet, dass es um 180° phasenverschoben zum erfassten Signal 11 verläuft. Ein solcherart phasenverschobenes Signal 13 wird anschließend in einer Vorrichtung 14 verstärkt und als verstärktes phasenverschobenes Schallsignal 15 einer Ausgabevorrichtung 16, welche zum Beispiel ein Lautsprecher ist, zugeführt. Das von der Ausgabevorrichtung 16 ausgegebene verstärkte phasenverschobene Schallsignal 17 wird dann mit dem emittierten Schallsignal 7 überlagert, so dass sich beide Signale nahezu oder vollständig zu Null addieren und somit auslöschen.

Ein Auslöschen der Signale gelingt am Besten, wenn der Ort der Erfassung des Erfassungssignals und der Ort der Überlagerung mit dem phasenverschobenen Signal identisch sind. Diese örtliche Überlagerung muss nicht immer erwünscht sein. Eventuell besteht der Wunsch darin, erst in einem vorbestimmten Abstand von der Erfassungseinrichtung ein Auslöschen der Signale zu erreichen, zum Beispiel am Rand einer bewohnten Umgebung. Dies lässt sich dadurch realisieren, dass mittels akustischer Holographie, inversem Beamforming oder mittels so genannter akustischer Kamera die Emission auch in einem Fernfeld von der Schallquelle entfernt erfasst oder zusätzlich berechnet wird. Die Ausgabevorrichtung muss dann so justiert sein, dass die gewünschte Überlagerung zwischen dem ausgegebenen verstärkten phasenverschobenen Signal und dem in einem vorbestimmten Abstand vorhandenen Schallsignal möglich ist. Eine solche Vorgehensweise kann ihre Begrenzung darin finden, dass Reflexionen, Beugungen oder Raumresonanzen durch andere Objekte in der Umgebung zu einem veränderten Schallsignal führen, welches nur noch in geringerem Maße mit dem erfassten Schallsignal korreliert. In diesem Fall ist zuvor ein sorgfältiges Ausmessen der Schallemissionen in der Umgebung des Kühlturmes sinnvoll.

In Fig. 4 ist eine schematische Darstellung einer Ausführungsform der erfindungsgemäßen Vorrichtung gezeigt. Ein Mikrophon 8 erfasst die Schallsignale, die von einer Luftaustrittsöffnung 21 am Kühlturm 20 emittiert werden. In der Vorrichtung 9 wird das in Abhängigkeit von der Zeit erfasste Signal um einen vorbestimmten Wert, z.B. 180°, phasenverschoben. Anschließend wird mittels eines Verstärkers 14 das phasenverschobene Signal verstärkt und mindestens einer Ausgabevorrichtung 16 zugeführt. Die Ausgabevorrichtung 16 kann mehrere Lautsprecher aufweisen, deren Zahl von der Größe der Luftaustrittsöffnung 21 und der Intensität des daraus emittierten Schallsignals abhängt. Bei dieser Ausführungsform sind mehrere Lautsprecher an der Umrandung der Luftaustrittsöffnung 21 angeordnet. Da die Signalverarbeitung von der Erfassung des Schallsignals bis zur Ausgabe an die Ausgabevorrichtung eine gewisse Zeit erfordert, ist es sinnvoll, die Phasenverschiebung nicht auf 180° starr zu begrenzen, sondern die Vorrichtung 9 so auszulegen, dass eine Phasenverschiebung in einem Bereich von zum Beispiel 150° bis 180° variabel einstellbar ist. In jedem Fall ist es vorteilhaft, die Phasenverschiebung an einem Verstärker einstellbar und je nach Anwendungsfall justierbar zu machen. Auf diese Weise kann zum Beispiel die Trägheit der Lautsprechermembranen berücksichtigt werden.

Es kann ferner zweckmäßig sein, den Schall über die Lautsprecher mit einer zeitlichen Verzögerung abzustrahlen. Da die vom Kühlturm ausgehende Schallemission gleichmäßig und stetig erfolgt, kann ein zeitlicher, phasenverschobener Nachlauf des von den Lautsprechern abgegebenen Schalls die Auslöschung der Schallemission weiter verbessern.

## Patentansprüche

1. Verfahren zur Schallemissionsminderung eines Kühlturmes (20) mit mindestens einer Lufteintrittsfläche und/oder einer Luftaustrittsfläche (21),
**gekennzeichnet durch** die Schritte:
- Erfassen eines an der Lufteintrittsfläche und/oder Luftaustrittsfläche (21) emittierten Schallsignals (7) in Abhängigkeit von der Zeit, so dass ein erfasstes Schallsignal (11) vorliegt,
- Phasenverschieben des erfassten Schallsignals (11), so dass ein phasenverschobenes Schallsignal (13) vorliegt,
- Verstärken des phasenverschobenen Schallsignals (13), so dass ein verstärktes phasenverschobenes Schallsignal (15) vorliegt, und
- Zuführen des verstärkten phasenverschobenen Schallsignals (15) zu mindestens einer Ausgabevorrichtung (16), so dass ein ausgegebenes verstärktes phasenverschobenes Schallsignal (17) generiert wird, wobei die Ausgabevorrichtung (16) im Bereich der Lufteintrittsfläche und/oder Luftaustrittsfläche (21) so angeordnet ist, dass ein Überlagerungs-Schallsignal aus der Überlagerung des ausgegebenen verstärkten phasenverschobenen Schallsignals (17) und des emittierten Schallsignals (7) erzeugt wird.

2. Verfahren nach Anspruch 1,
**dadurch gekennzeichnet,**
**dass** die Ausbreitungsrichtung des von der Ausgabevorrichtung (16) ausgegebenen verstärkten phasenverschobenen Schallsignals (17) vom Kühlturm (20) fort gerichtet ist.

3. Verfahren nach Anspruch 1 oder 2,
**dadurch gekennzeichnet,**
**dass** das Erfassen des Schallsignals in einem Bereich der Lufteintrittsfläche und/oder Luftaustrittsfläche (21) vorgenommen wird, in dem die höchste räumliche Schallintensität besteht.

4. Verfahren nach einem der Ansprüche 1 bis 3,
**dadurch gekennzeichnet,**
**dass** das Phasenverschieben des erfassten Schallsignals (11) derart vorgenommen wird, dass der Mittelwert des Überlagerungs-Schallsignals ein Minimum erreicht.

5. Verfahren nach Anspruch 4,
**dadurch gekennzeichnet,**
**dass** das Minimum in einem vorbestimmten Abstand von der Lufteintrittsfläche und/oder Luftaustrittsfläche (21) erreicht wird.

6. Verfahren nach einem der Ansprüche 1 bis 5,
**dadurch gekennzeichnet,**
**dass** beim Phasenverschieben das erfasste Schallsignal (11) in einem Bereich von 150° bis 180° phasenverschoben wird.

7. Verfahren nach einem der Ansprüche 1 bis 6,
**dadurch gekennzeichnet,**
**dass** das emittierte Schallsignal (7) in einem Frequenzbereich von 500 Hz bis 8000 Hz erfasst wird.

8. Verfahren nach einem der Ansprüche 1 bis 7,
**dadurch gekennzeichnet,**
**dass** das Verstärken des phasenverschobenen Schallsignals (13) mittels eines Verstärkers (14) verstellbar ist.

9. Verfahren nach einem der Ansprüche 1 bis 8,
**dadurch gekennzeichnet,**
**dass** zum Erfassen des emittierten Schallsignals (7) an einer Lufteintrittsfläche und/oder Luftaustrittsfläche (21) mehrere Erfassungseinrichtungen (8) zum Einsatz kommen.

10. Verfahren nach einem der Ansprüche 1 bis 9,
**dadurch gekennzeichnet,**
**dass** das verstärkte phasenverschobene Schallsignal (15) mehreren Ausgabevorrichtungen (16) zugeführt wird.

11. Vorrichtung (18) zur Schallemissionsminderung eines Kühlturmes (20) mit mindestens einer Lufteintrittsfläche und/oder einer Luftaustrittsfläche (21),
**gekennzeichnet durch**:
- mindestens eine Erfassungsvorrichtung (8) zum Erfassen eines emittierten Schallsignals (7) in Abhängigkeit von der Zeit, so dass ein erfasstes Schallsignal (11) generierbar ist,
- eine Vorrichtung (12) zum Phasenverschieben des erfassten Schallsignals (11), so dass ein phasenverschobenes Schallsignal (13) generierbar ist,
- eine Vorrichtung (14) zum Verstärken des phasenverschobenen Schallsignals (13), so dass ein verstärktes phasenverschobenes Schallsignal (15) generierbar ist, und
- mindestens eine Ausgabevorrichtung (16) zum Ausgeben des verstärkten phasenverschobenen Schallsignals (15), so dass ein ausgegebenes verstärktes phasenverschobenes Schallsignal (17) generierbar ist, wobei die Ausgabevorrichtung (16) im Bereich der Lufteintrittsfläche und/oder Luftaustrittsfläche (21) so angeordnet ist, dass ein Überlagerungs-Schallsignal aus der Überlagerung des ausgegebenen verstärkten phasenverschobenen Schallsignals (17) und des emittierten Schallsignals (7) generierbar ist.

12. Vorrichtung (18) nach Anspruch 11,
**dadurch gekennzeichnet,**
**dass** das Phasenverschieben derart durchführbar ist, dass der Mittelwert des Überlagerungs-Schallsignals ein Minimum erreicht.

13. Vorrichtung (18) nach Anspruch 11 oder 12,
**dadurch gekennzeichnet,**
**dass** das Phasenverschieben des erfassten Schallsignals (11) um 150° bis 180° durchführbar ist.

14. Vorrichtung (18) nach einem der Ansprüche 11 bis 13,
**dadurch gekennzeichnet,**
**dass** die Erfassungseinrichtung (8) ein Mikrophon aufweist und die Ausgabevorrichtung (16) einen Lautsprecher aufweist.

15. Vorrichtung (18) nach einem der Ansprüche 11 bis 14,
**dadurch gekennzeichnet,**
**dass** für jede Erfassungseinrichtung (8) mindestens eine Ausgabevorrichtung (16) für ein zugehöriges Überlagerungs-Schallsignal vorgesehen ist, wobei der Mittelwert des Überlagerungs-Schallsignals in einem vorbestimmten Abstand von der Lufteintrittsfläche und/oder Luftaustrittsfläche (21) ein Minimum erreicht.

16. Kühlturm (20) mit einer Vorrichtung gemäß einem der Ansprüche 11 bis 15.
